# FASCICULE DE BREVET EUROPEEN

(11) **EP 3 438 379 B1**
(45) Date de publication et mention de la délivrance du brevet: **18.03.2020**
(21) Numéro de dépôt: 18179250.8
(22) Date de dépôt: 22.06.2018
(51) Int. Cl.: E04H 4/14, B32B 27/08, B32B 27/30, E04B 1/66, E04H 4/00, B29C 65/00

(54) **MEMBRANE D'ÉTANCHÉITÉ DE BASSIN, SON PROCÉDÉ DE SOUDAGE, BASSIN AYANT CELLE-CI**
BECKENABDICHTFOLIE, IHR VERSCHWEISSUNGSVERFAHREN, BECKEN MIT EINER SOLCHEN FOLIE
POOL SEALING MEMBRANE, METHOD FOR WELDING SAME AND POOL PROVIDED WITH SAME

(30) Priorité: 03.08.2017 FR 1757461
(43) Date de publication de la demande: 06.02.2019
(73) Titulaire: Procopi, 35650 Le Rheu (FR)
(72) Inventeur: Bourgeois, Jocelyn, 35135 Chantepie (FR)
(74) Mandataire: Regimbeau

(56) Documents cités:
- EP-A1- 1 243 716
- FR-A1- 2 393 993
- US-A- 4 568 588
- US-A1- 2016 102 470

## Description

L'invention concerne une membrane d'étanchéité de bassin.

Un domaine d'application de l'invention concerne les membranes servant à réaliser l'étanchéité de bassins ou de piscines, notamment de piscines enterrées.

Ces membranes doivent notamment être en contact direct avec l'eau de la piscine.

Lors de la réalisation de la piscine, il est connu de recouvrir le côté intérieur des parois de la piscine et le fond de la piscine de plusieurs lés de la membrane d'étanchéité, ayant été dévidés d'un rouleau sur lequel est enroulée la membrane. Cette membrane d'étanchéité est généralement constituée de 2 membranes de PVC plastifié de 75/100 d'épaisseur et entre ces 2 membranes, d'une trame tissé en tissu polyester.

Dans un premier temps, le piscinier soude les lés entre eux en les superposant de 2 à 5 cm. Une fois l'ensemble assemblé par soudure, il faut confirmer chaque mètre de soudure en appliquant un liquide d'étanchéité, tel que par exemple du PVC liquide, sur le bord afin d'éviter que de l'eau ne pénètre dans la trame par capillarité provoquant un défaut d'étanchéité. On forme ainsi un volume fermé et étanche, devant être rempli de l'eau de la piscine ou du bassin.

Ce procédé d'assemblage nécessitant une confirmation de la soudure présente plusieurs inconvénients :
- L'opération de confirmation de la soudure par application d'un liquide d'étanchéité est longue et fastidieuse.
- Il est nécessaire d'attendre que le liquide d'étanchéité ainsi déposé sèche, empêchant de mettre la piscine en eau pendant ce temps.
- Le liquide d'étanchéité n'est jamais exactement de la même couleur que la membrane et cela se voit même une fois la piscine remplie d'eau.
- Le liquide d'étanchéité va vieillir différemment de la membrane.
- Une fois le flacon contenant le liquide d'étanchéité ouvert, le liquide va sécher en quelques semaines, le rendant inutilisable.

L'invention vise à obtenir une membrane d'étanchéité de piscine ou de bassin, un procédé de soudage à chaud de plusieurs membranes d'étanchéité de piscine ou de bassin, ainsi qu'un bassin ainsi réalisé, qui pallient les inconvénients indiqués ci-dessus et permette d'effectuer ce soudage plus rapidement, avec un coût moindre, une meilleure étanchéité et un meilleur aspect.

A cet effet, un premier objet de l'invention est une membrane d'étanchéité de bassin, comportant dans le sens de l'épaisseur :
- une première feuille d'étanchéité en un matériau soudable à chaud, qui est destinée à être tournée vers l'eau du bassin ou qui est recouverte d'au moins une première autre couche destinée à être tournée vers l'eau du bassin,
- une deuxième feuille d'étanchéité en un matériau soudable à chaud, destinée à être tournée en partie vers une autre membrane et à être plus éloignée de l'eau du bassin que la première feuille d'étanchéité,
- et une trame située entre la première feuille d'étanchéité et la deuxième feuille d'étanchéité,
la membrane d'étanchéité de bassin comportant au moins un bord, ayant un premier chant de la première feuille d'étanchéité et un deuxième chant de la deuxième feuille d'étanchéité,
caractérisée en ce que
le bord comporte, dans le sens de l'épaisseur, une partie en biais située dans le premier chant de la première feuille d'étanchéité et/ou dans le deuxième chant de la deuxième feuille d'étanchéité,
la partie en biais s'élargissant perpendiculairement au sens de l'épaisseur de la membrane en allant du deuxième chant de la deuxième feuille d'étanchéité au premier chant de la première feuille d'étanchéité, le premier chant de la première feuille d'étanchéité étant au moins partiellement en surplomb par rapport au deuxième chant de la deuxième feuille d'étanchéité.

L'invention permet ainsi de réaliser une soudure rapide de la membrane d'étanchéité au niveau du bord ayant la partie en biais avec une autre membrane d'étanchéité, par apport de pression et de chaleur sur ce bord et avantageusement sans apport de matière de soudage, et ce d'une manière fiable et rapide, en permettant de gagner en coût de matériaux, en temps d'intervention, en coût de main d'œuvre et en esthétique. Du fait que la trame est noyée dans la soudure ainsi réalisée au niveau du bord, le bord soudé présente ainsi, vers l'extérieur, du matériau d'étanchéité mélangé des premières et deuxièmes feuilles, empêchant le passage de l'humidité par capillarité dans la trame. Une fois soudé, le bord garde ainsi totalement le même aspect que le reste de la membrane. L'invention se dispense ainsi d'une étape de confirmation de la soudure par application d'un liquide d'étanchéité.

Suivant un mode de réalisation de l'invention, le deuxième chant de la deuxième feuille d'étanchéité possède un chanfrein comme partie en biais.

Suivant un mode de réalisation de l'invention, la partie en biais est située en deux bords d'extrémité, opposés l'un à l'autre, de la membrane.

Suivant un mode de réalisation de l'invention, la partie en biais est en biseau situé dans le premier chant de la première feuille d'étanchéité et/ou dans le deuxième chant de la deuxième feuille d'étanchéité.

Suivant un mode de réalisation de l'invention, la partie en biais occupe la totalité de l'épaisseur du premier chant de la première feuille d'étanchéité et/ou la totalité de l'épaisseur du deuxième chant de la deuxième feuille d'étanchéité.

Suivant un mode de réalisation de l'invention, la première autre couche destinée à être tournée vers l'eau du bassin est au moins une couche de vernis de protection recouvrant la première feuille d'étanchéité.

Suivant un mode de réalisation de l'invention, la première feuille d'étanchéité est en PVC ou comporte du PVC, la deuxième feuille d'étanchéité est en PVC ou comporte du PVC.

Un deuxième objet de l'invention est un procédé de soudage bout à bout d'une première membrane d'étanchéité de bassin telle que décrite ci-dessus sur une deuxième membrane d'étanchéité de bassin,
la deuxième membrane d'étanchéité de bassin ayant au moins une troisième feuille d'étanchéité en un matériau soudable à chaud, qui est destinée à être tournée vers l'eau du bassin ou qui est recouverte d'au moins une deuxième autre couche destinée à être tournée vers l'eau du bassin,
caractérisé en ce que
l'on place une première zone de bordure de la deuxième feuille d'étanchéité en recouvrement contre une deuxième zone de bordure de la troisième feuille d'étanchéité ou de la deuxième autre couche recouvrant la troisième feuille d'étanchéité, la première zone de bordure se terminant par le bord ayant initialement la partie en biais, de telle sorte que la partie en biais soit en surplomb au-dessus de la troisième feuille d'étanchéité ou de la deuxième autre couche recouvrant la troisième feuille d'étanchéité,
puis au cours d'une étape de soudage à chaud, on applique sur la première feuille d'étanchéité ou sur la première autre couche recouvrant la première feuille d'étanchéité une pression à chaud au-dessus du bord et au-dessus de la première zone de bordure, pour abaisser la partie en biais et/ou le premier chant de la première feuille d'étanchéité et/ou le deuxième chant de la deuxième feuille d'étanchéité contre la troisième feuille d'étanchéité ou contre la deuxième autre couche recouvrant la troisième feuille d'étanchéité, afin de réaliser une soudure de la partie en biais et/ou du premier chant de la première feuille d'étanchéité et/ou du deuxième chant de la deuxième feuille d'étanchéité contre la troisième feuille d'étanchéité ou contre la deuxième autre couche recouvrant la troisième feuille d'étanchéité et afin de réaliser une soudure de la première zone de bordure de la première membrane d'étanchéité de bassin contre la deuxième zone de bordure de la deuxième membrane d'étanchéité de bassin.

Suivant un mode de réalisation de l'invention, la soudure est localisée sur le bord de la première membrane d'étanchéité de bassin.

Suivant un mode de réalisation de l'invention, la première feuille d'étanchéité est en PVC ou comporte du PVC, la deuxième feuille d'étanchéité est en PVC ou comporte du PVC, la troisième feuille d'étanchéité est en PVC ou comporte du PVC.

Un troisième objet de l'invention est un bassin destiné à contenir un liquide, le bassin comportant un fond et des parois délimitant un volume destiné à contenir le liquide,
caractérisé en ce que le fond et/ou au moins l'une des parois comporte au moins une première membrane d'étanchéité de bassin telle que décrite ci-dessus, dont le bord est soudé à une deuxième membrane d'étanchéité de bassin par le procédé de soudage tel que décrit ci-dessus,
la deuxième membrane d'étanchéité de bassin ayant au moins une troisième feuille d'étanchéité en un matériau soudable à chaud, qui est destinée à être tournée vers l'eau du bassin ou qui est recouverte d'au moins une deuxième autre couche destinée à être tournée vers l'eau du bassin.

L'invention sera mieux comprise à la lecture de la description qui va suivre, donnée uniquement à titre d'exemple non limitatif en référence aux dessins annexés, sur lesquels :
- la figure 1 représente schématiquement en coupe transversale partielle agrandie une membrane d'étanchéité de bassin suivant un mode de réalisation de l'invention, lors d'une étape de placement sur une autre membrane d'étanchéité de bassin,
- la figure 2 représente schématiquement en coupe transversale partielle agrandie une membrane d'étanchéité de bassin suivant un mode de réalisation de l'invention, lors d'une étape de soudage sur une autre membrane d'étanchéité de bassin,
- les figures 3 et 7 à 12 représentent schématiquement en coupe transversale partielle agrandie une membrane d'étanchéité de bassin suivant des modes de réalisation de l'invention,
- la figure 4 représente schématiquement en coupe transversale partielle agrandie une membrane d'étanchéité de bassin suivant un autre mode de réalisation de l'invention, lors d'une étape de placement sur une autre membrane d'étanchéité de bassin,
- la figure 5 représente schématiquement en coupe transversale partielle agrandie une membrane d'étanchéité de bassin suivant un autre mode de réalisation de l'invention, lors d'une étape de soudage sur une autre membrane d'étanchéité de bassin,
- la figure 6 représente schématiquement en perspective un rouleau de stockage de membrane d'étanchéité de bassin suivant un mode de réalisation de l'invention,
- la figure 13 représente schématiquement en vue de dessus partielle agrandie une membrane d'étanchéité de bassin suivant un mode de réalisation de l'invention.

Aux figures est représentée la membrane 10 d'étanchéité de bassin ou de piscine, qui est une membrane d'étanchéité armée. Cette membrane 10 comporte, dans le sens de l'épaisseur une première feuille 1 d'étanchéité en un matériau soudable à chaud, une deuxième feuille 2 d'étanchéité en un matériau soudable à chaud, et une trame 3 (trame d'armature) située entre la première feuille 1 d'étanchéité et la deuxième feuille 2 d'étanchéité.

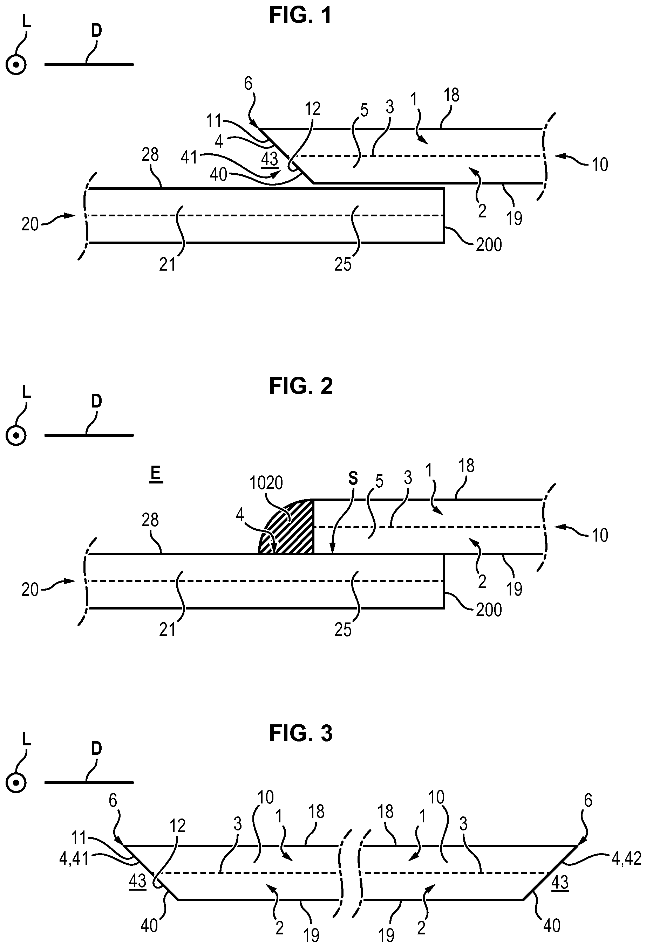

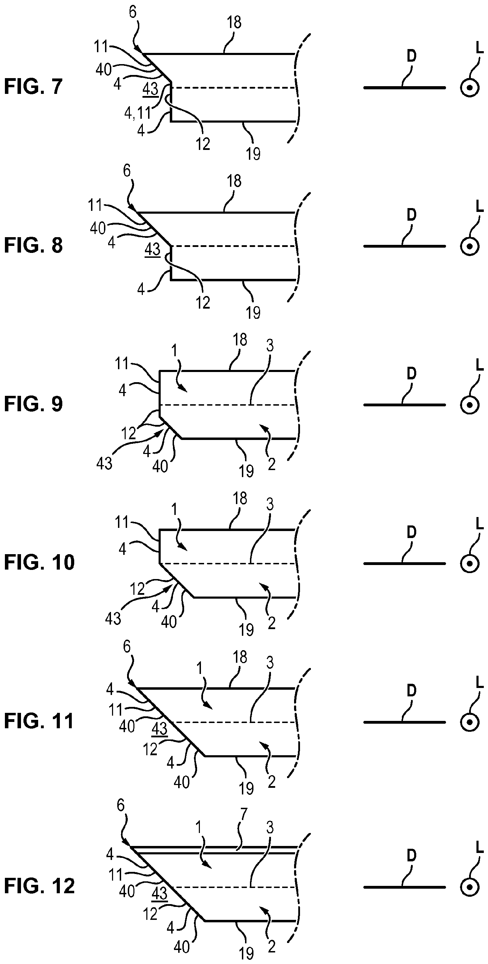

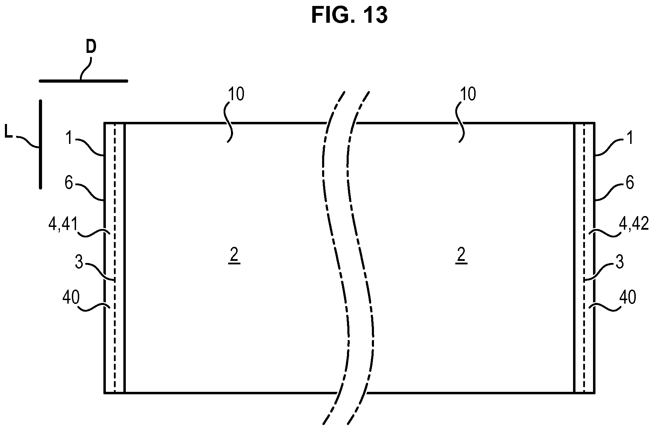

La feuille 1 peut former la surface supérieure 18 de la membrane 10 et dans ce cas est destinée à être tournée vers l'eau E du bassin et est en contact direct avec l'eau E du bassin, lorsque ce bassin est rempli d'eau, ainsi que représenté aux figures 1 à 5, 7 à 11 et 13. La feuille 1 peut également être est recouverte d'au moins une première autre couche 7 (par exemple une ou plusieurs couche(s) de vernis protecteur), qui est destinée à être tournée vers l'eau du bassin et qui est en contact direct avec l'eau E du bassin, lorsque ce bassin est rempli d'eau, ainsi que représenté à la figure 12, cette première autre couche 7 formant alors la surface supérieure 18 de la membrane 10. La feuille 2 ou feuille inférieure 2 est destinée à être tournée en partie vers une autre membrane 20 (deuxième membrane 20 d'étanchéité) et à être plus éloignée de l'eau E du bassin et de la surface supérieure 18 de la membrane 10 que la première feuille 1 d'étanchéité. La feuille 2 peut former la surface inférieure 19 de la membrane 10, ainsi que représenté aux figures 1 à 5 et 7 à 12. La première feuille 1 d'étanchéité et la deuxième feuille 2 d'étanchéité étant soudables à chaud par superposition sur l'autre membrane 20.

La membrane 10 peut par exemple être une membrane d'étanchéité PVC armée, où les feuilles 1 et 2 sont en PVC ou comportent du PVC. La trame peut être en tissu polyester. Bien entendu, d'autres matières des feuilles 1 et 2 et de la trame sont possibles. Par exemple, la membrane 10 peut avoir une épaisseur de 150 centièmes de millimètres, les feuilles 1 et 2 pouvant avoir chacune 75 centièmes de millimètre d'épaisseur. Bien entendu, d'autres épaisseurs des feuilles 1 et 2 et de la membrane 10 sont possibles.

La membrane 10 d'étanchéité de bassin comporte un ou plusieurs bords 4, ayant chacun un premier chant 11 de la première feuille 1 d'étanchéité et un deuxième chant 12 de la deuxième feuille 2 d'étanchéité.

Suivant l'invention, ainsi que représenté aux figures 1, 3, 4, et 7 à 13, le ou les bords 4 comporte, dans le sens de l'épaisseur, une partie 40 en biais, qui est située dans le premier chant 11 de la première feuille 1 d'étanchéité et/ou dans le deuxième chant 12 de la deuxième feuille 2 d'étanchéité. La partie 40 en biais s'élargit en allant du deuxième chant 12 de la deuxième feuille 2 d'étanchéité au premier chant 11 de la première feuille 1 d'étanchéité, la largeur étant prise dans une direction D superficielle de la membrane 10, perpendiculaire au sens de l'épaisseur de la membrane 10. Dans les modes de réalisation représentés aux figures 1, 3, 4, et 7 à 13, la partie 40 en biais peut être est en biseau, à savoir être elle-même rectiligne. La partie 40 en biais pourrait être courbe dans d'autres modes de réalisation non représentés.

Ainsi, la partie 40 en biais ménage un creux 43 sous la surface supérieure 18 de la première feuille 1 d'étanchéité, ce qui rend le bord 4 abaissable par fusion sur une autre membrane 20 afin de l'y souder.

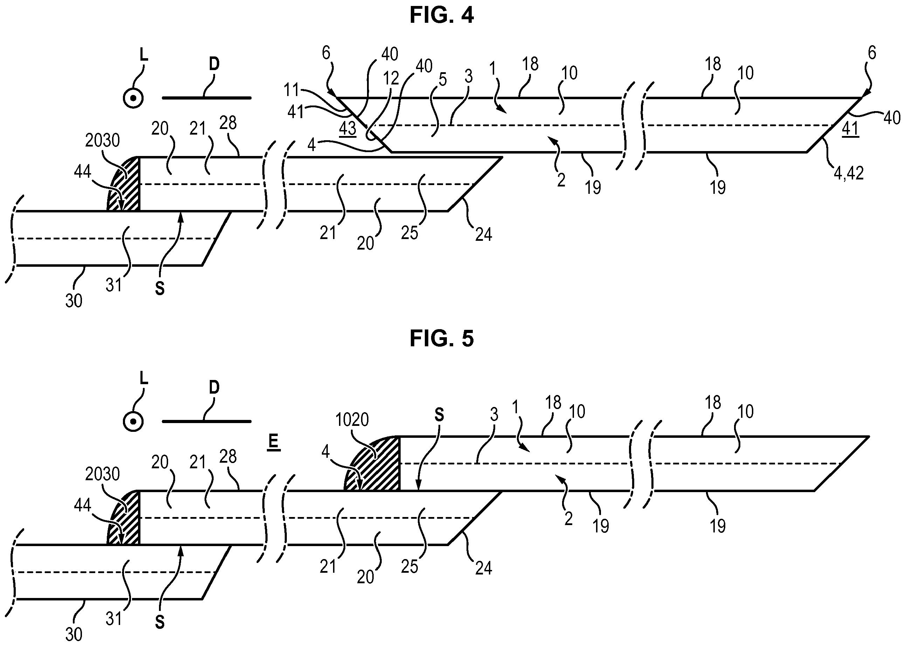

Grâce à la partie 40 en biais, un utilisateur peut souder directement le bord 4 de la membrane 10 sur une autre membrane 20 placée au-dessous de la membrane 10, en abattant ce bord 4 sur le creux 43, ainsi que représenté aux figures 2 et 5.

On décrit ci-dessous différents modes de réalisation de la partie 40 en biais.

Par exemple, aux figures 1, 3, 4, 7, 8, 11, 12 et 13, la partie 40 en biais se termine vers la surface supérieure 18 par une pointe 6 faisant un angle aigu dans le premier chant 11.

Par exemple, aux figures 1, 3, 4, 8, 11, 12 et 13, la partie 40 en biais occupe la totalité de l'épaisseur du premier chant 11 de la première feuille 1 d'étanchéité. Le premier chant 11 de la première feuille 1 d'étanchéité est donc totalement en surplomb par rapport au deuxième chant 12 de la deuxième feuille 2 d'étanchéité et totalement en saillie au-dessus du deuxième chant 12 de la deuxième feuille 2 d'étanchéité. Par exemple, aux figures 1, 3, 4, 11, 12 et 13, la partie 40 en biais occupe également la totalité de l'épaisseur du deuxième chant 12 de la deuxième feuille 2 d'étanchéité et peut être dans un même plan incliné dans le premier chant 11 et dans le deuxième chant 12.

Par exemple, à la figure 7, la partie 40 en biais occupe une partie de l'épaisseur du premier chant 11 de la première feuille 1 d'étanchéité. Le premier chant 11 de la première feuille 1 d'étanchéité est donc partiellement en surplomb par rapport au deuxième chant 12 de la deuxième feuille 2 d'étanchéité et totalement en saillie au-dessus du deuxième chant 12 de la deuxième feuille 2 d'étanchéité.

Par exemple, aux figures 9 et 10, la partie 40 en biais est sous la forme d'un chanfrein présent dans le deuxième chant 12 de la deuxième feuille 2 d'étanchéité. A la figure 9, la partie 40 en biais occupe une partie de l'épaisseur du deuxième chant 12 de la deuxième feuille 2 d'étanchéité. A la figure 10, la partie 40 en biais occupe la totalité de l'épaisseur du deuxième chant 12 de la deuxième feuille 2 d'étanchéité.

Le bord 4 ayant la partie 40 en biais peut être situé en un seul bord d'extrémité de la membrane 10, par exemple s'étendant suivant une direction surfacique longitudinale L de la membrane 10, perpendiculaire au sens de l'épaisseur et à la direction surfacique D. Dans les modes de réalisation représentés aux figures 3, 4, 6 et 13, le bord 4 ayant la partie 40 en biais peut être situé en deux bords 41 et 42 d'extrémité, opposés l'un à l'autre suivant la direction surfacique D, de la membrane 10, ces bords 41 et 42 s'étendant par exemple suivant la direction surfacique longitudinale L de la membrane 10, perpendiculaire au sens de l'épaisseur et à la direction surfacique D.

La partie 40 en biais du bord 4 peut être réalisée par une machine ou un outil de découpe, par exemple à lame de découpe rotative et à guidage de la membrane 10 en biais par rapport au plan de rotation de la lame. Bien entendu, tout autre moyen de découpe peut être utilisé.

On décrit ci-dessous un procédé de soudage par superposition ou recouvrement de la première membrane 10 d'étanchéité de bassin suivant l'invention sur une deuxième membrane 20 d'étanchéité de bassin, en référence aux figures 1, 2, 4 et 5. Une fois le soudage réalisé, la première membrane 10 d'étanchéité de bassin et la deuxième membrane 20 d'étanchéité de bassin sont dans le prolongement l'une de l'autre suivant la direction D transversale au bord 4.

La deuxième membrane 20 d'étanchéité de bassin possède au moins une troisième feuille 21 d'étanchéité en un matériau soudable à chaud. La troisième feuille 21 d'étanchéité peut être en PVC ou comporter du PVC, ou autres. La feuille 21 peut former la surface supérieure 28 de la membrane 10 et dans ce cas est destinée à être tournée vers l'eau E du bassin et est en contact direct avec l'eau E du bassin, lorsque ce bassin est rempli d'eau. La feuille 21 peut également être est recouverte d'au moins une deuxième autre couche, non représentée (par exemple une couche de vernis), qui fait partie de la membrane 20 et destinée à être tournée vers l'eau du bassin et qui est en contact direct avec l'eau E du bassin, lorsque ce bassin est rempli d'eau, cette deuxième autre couche formant alors la surface supérieure 28 de la membrane 20. La deuxième membrane 20 d'étanchéité de bassin peut être analogue à la première membrane 10 d'étanchéité, ainsi que représenté par exemple aux figures 4 et 5 et avoir ses différents modes de réalisation, ou être d'une réalisation différente de celles de la première feuille 10 d'étanchéité.

Lors d'une première étape de placement, illustrée à titre d'exemple aux figures 1 et 4, on place une première zone 5 de bordure de la première membrane 10 d'étanchéité en recouvrement contre une deuxième zone 25 de bordure de la deuxième membrane 20 d'étanchéité, la première zone de bordure se terminant par le bord 4 ayant la partie 40 en biais. Cette première étape de placement est effectuée, de telle sorte que dans ces zones de bordure 5 et 25 la deuxième feuille 2 d'étanchéité se trouve contre la surface supérieure 28 de la deuxième membrane 20 d'étanchéité, à savoir contre la troisième feuille 21 d'étanchéité ou contre la deuxième autre couche recouvrant la troisième feuille 21 d'étanchéité, et que la partie 40 en biais soit en surplomb au-dessus de la surface supérieure 28 de la deuxième membrane 20 d'étanchéité. Ainsi, le bord 4 pointe vers l'extérieur et vers le dessus par rapport à la deuxième membrane 20 d'étanchéité et a son creux 43 situé entre la première membrane 10 d'étanchéité et la deuxième membrane 20 d'étanchéité.

Au cours d'une deuxième étape de soudage à chaud, illustrée à titre d'exemple aux figures 2 et 5 et postérieure à la première étape de placement, on applique dans la zone du bord 4 sur la surface supérieure 18 de la première membrane 10 et sur la première zone 5 de bordure se trouvant en recouvrement sur la deuxième zone 25 de bordure, et ce sur la première feuille 1 d'étanchéité ou sur la première autre couche 7 recouvrant la première feuille 1 d'étanchéité, une pression à chaud. Cela peut être effectué par exemple à l'aide d'un outil de pression, pouvant être par exemple une molette montée libre de tourner sur un manche sur lequel appuie d'une main l'utilisateur et par un outil d'apport de chaleur localisé, pouvant être par exemple un bec chauffant, par exemple à air chaud soufflé, tenu de l'autre main par l'utilisateur. L'application de la pression à chaud sur le bord 4 à partie 40 en biais sous-jacente et sur la première zone 5 de bordure se trouvant en recouvrement sur la deuxième zone 25 de bordure et se terminant par ce bord 4 fait fondre la matière des feuilles 1 et 2 de la membrane 10 et la matière de la troisième feuille 21 et abaisse dans la zone de ce bord 4 la partie 40 en biais et/ou le premier chant 11 de la première feuille 1 d'étanchéité et/ou le deuxième chant 12 de la deuxième feuille 2 d'étanchéité contre la troisième feuille 21 d'étanchéité ou contre la deuxième autre couche recouvrant la troisième feuille 21 d'étanchéité. Cette application de la pression à chaud réalise donc une soudure 1020, ainsi que représenté à titre d'exemple par les hachures aux figures 2 et 5, entre d'une part la partie 40 en biais et/ou le premier chant 11 de la première feuille 1 d'étanchéité et/ou le deuxième chant 12 de la deuxième feuille 2 d'étanchéité et d'autre part la troisième feuille 21 d'étanchéité ou la deuxième autre couche recouvrant la troisième feuille 21 d'étanchéité dans la zone du bord 4 et, en plus de la soudure 1020, la soudure S de l'ensemble de la première zone 5 de bordure sur l'ensemble de la deuxième zone 25 de bordure, ainsi que représenté aux figures 2 et 5, la soudure S jouxtant donc la soudure 1020.

Dans les modes de réalisation représentés aux figures 2 et 5, cette soudure 1020 est localisée sur le bord 4 d'extrémité de la première membrane 10 et sur la partie sous-jacente de la deuxième membrane 20.

Dans les modes de réalisation représentés aux figures 4 et 5, la deuxième membrane 20 d'étanchéité de bassin est analogue à la première membrane 10 d'étanchéité. Dans sa zone 25 de bordure, la membrane 20 comporte un bord 24 analogue au bord 4 dans ses différents modes de réalisation décrits ci-dessus (et par exemple selon la figure 11 ou 12), et donc orienté vers le bas par rapport à la première membrane 10 située au-dessus.

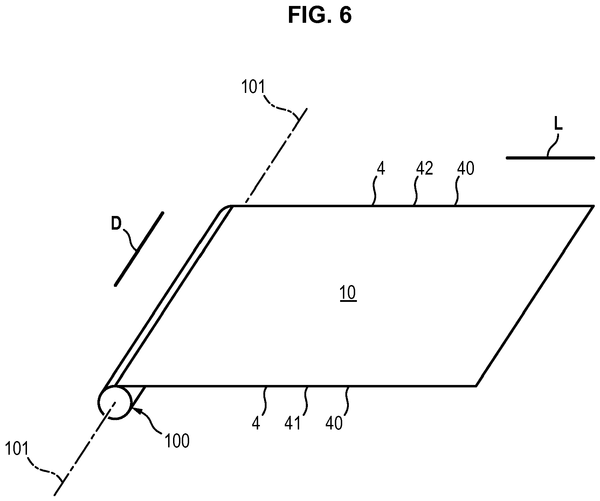

Dans le mode de réalisation représenté à la figure 6, préalablement au procédé de soudage, la première membrane 10 et/ou la deuxième membrane 20 et/ou la troisième membrane 30 sont enroulées sur un rouleau 100 cylindrique autour d'un axe géométrique central 101 sensiblement parallèle à la première direction D surfacique, le bord 4 à partie 40 en biais ou les bords 4 (bords 41, 42) à partie 40 en biais étant sensiblement perpendiculaires à l'axe géométrique central 101 d'enroulement du rouleau 100 et étant donc enroulés selon plusieurs spires autour du rouleau 100.

Afin d'avoir lors du procédé de soudage, des membranes 10, 20, 30 de différentes longueurs suivant la direction L longitudinale, on peut découper la membrane 10, 20, 30 sur le rouleau 100, par exemple sensiblement parallèlement à la direction D pour en prélever un morceau. Afin d'avoir lors du procédé de soudage, des membranes 10, 20, 30 de différentes largeurs suivant la direction D et de découper un lé de membrane, on peut ensuite découper en deux le morceau de membrane 10, 20, 30, par exemple sensiblement parallèlement à la direction longitudinale L. Ainsi, par exemple le morceau peut être découpé en deux entre les deux bords 41 et 42, par exemple sensiblement parallèlement à la direction longitudinale L. Le lé possède ainsi découpé peut posséder dans ce cas un autre bord 200 sensiblement perpendiculaire aux directions D et L et de forme différente de celle du bord 4, ainsi que cela est représenté par exemple aux figures 1 et 2 pour le bord 200 de la membrane 20, lequel est situé sous la première membrane 10 et termine la zone 25 de bordure.

Les figures 4 et 5 montrent que la deuxième membrane 20 a un bord 44 analogue au bord 4 et possède au niveau de ce bord 44 une soudure 2030, qui est analogue à la soudure 1020 et qui soude ce bord 44 à la troisième membrane 30 d'étanchéité de bassin placée sous la deuxième membrane 20 au bout de celle-ci, et que la deuxième membrane 20 a la soudure S entre les zones de bordure superposées des membranes 20 et 30.

On peut ainsi souder les unes au bout des autres et l'une sur l'autre au niveau de leur bord 4, 44 d'extrémité et de leur zone 5, 25 en une seule étape de soudage à chaud les membranes 10, 20, 30 d'étanchéité pour réaliser le fond et/ou l'une ou plusieurs des parois d'un bassin, ce fond et ces parois délimitant un volume destiné à contenir un liquide, comme par exemple de l'eau pour une piscine ou autre, notamment pour une piscine enterrée.

## Revendications

1. Membrane (10) d'étanchéité de bassin, comportant dans le sens de l'épaisseur :
- une première feuille (1) d'étanchéité en un matériau soudable à chaud, qui est destinée à être tournée vers l'eau du bassin ou qui est recouverte d'au moins une première autre couche (7) destinée à être tournée vers l'eau du bassin,
- une deuxième feuille (2) d'étanchéité en un matériau soudable à chaud, destinée à être tournée en partie vers une autre membrane et à être plus éloignée de l'eau du bassin que la première feuille (1) d'étanchéité,
- et une trame (3) située entre la première feuille (1) d'étanchéité et la deuxième feuille (2) d'étanchéité,
la membrane (10) d'étanchéité de bassin comportant au moins un bord (4), ayant un premier chant (11) de la première feuille (1) d'étanchéité et un deuxième chant (12) de la deuxième feuille (2) d'étanchéité,
**caractérisée en ce que**
le bord (4) comporte, dans le sens de l'épaisseur, une partie (40) en biais située dans le premier chant (11) de la première feuille (1) d'étanchéité et/ou dans le deuxième chant (12) de la deuxième feuille (2) d'étanchéité,
la partie (40) en biais s'élargissant perpendiculairement au sens de l'épaisseur de la membrane (10) en allant du deuxième chant de la deuxième feuille (2) d'étanchéité au premier chant de la première feuille (1) d'étanchéité, le premier chant (11) de la première feuille (1) d'étanchéité étant au moins partiellement en surplomb par rapport au deuxième chant (12) de la deuxième feuille (2) d'étanchéité.

2. Membrane (10) d'étanchéité suivant la revendication 1, **caractérisée en ce que** le deuxième chant (12) de la deuxième feuille (2) d'étanchéité possède un chanfrein comme partie (40) en biais.

3. Membrane (10) d'étanchéité suivant l'une quelconque des revendications précédentes, **caractérisée en ce que** la partie (40) en biais est située en deux bords (41, 42) d'extrémité, opposés l'un à l'autre, de la membrane (10).

4. Membrane (10) d'étanchéité suivant l'une quelconque des revendications précédentes, **caractérisée en ce que** la partie (40) en biais est en biseau situé dans le premier chant (11) de la première feuille (1) d'étanchéité et/ou dans le deuxième chant (12) de la deuxième feuille (2) d'étanchéité.

5. Membrane (10) d'étanchéité suivant l'une quelconque des revendications précédentes, **caractérisée en ce que** la partie (40) en biais occupe la totalité de l'épaisseur du premier chant (11) de la première feuille (1) d'étanchéité et/ou la totalité de l'épaisseur du deuxième chant (12) de la deuxième feuille (2) d'étanchéité.

6. Membrane (10) d'étanchéité suivant l'une quelconque des revendications précédentes, **caractérisée en ce que** la première autre couche destinée à être tournée vers l'eau du bassin est au moins une couche (7) de vernis de protection recouvrant la première feuille (1) d'étanchéité.

7. Membrane (10) d'étanchéité suivant l'une quelconque des revendications précédentes, **caractérisée en ce que** la première feuille (1) d'étanchéité est en PVC ou comporte du PVC, la deuxième feuille (2) d'étanchéité est en PVC ou comporte du PVC.

8. Procédé de soudage bout à bout d'une première membrane (10) d'étanchéité de bassin suivant l'une quelconque des revendications précédentes sur une deuxième membrane (20) d'étanchéité de bassin,
la deuxième membrane (20) d'étanchéité de bassin ayant au moins une troisième feuille (21) d'étanchéité en un matériau soudable à chaud, qui est destinée à être tournée vers l'eau du bassin ou qui est recouverte d'au moins une deuxième autre couche destinée à être tournée vers l'eau du bassin,
**caractérisé en ce que**
l'on place une première zone (5) de bordure de la deuxième feuille (2) d'étanchéité en recouvrement contre une deuxième zone (25) de bordure de la troisième feuille (21) d'étanchéité ou de la deuxième autre couche recouvrant la troisième feuille (21) d'étanchéité, la première zone de bordure se terminant par le bord (4) ayant initialement la partie (40) en biais, de telle sorte que la partie (40) en biais soit en surplomb au-dessus de la troisième feuille (21) d'étanchéité ou de la deuxième autre couche recouvrant la troisième feuille (21) d'étanchéité,
puis au cours d'une étape de soudage à chaud, on applique sur la première feuille (1) d'étanchéité ou sur la première autre couche (7) recouvrant la première feuille (1) d'étanchéité une pression à chaud au-dessus du bord (4) et au-dessus de la première zone (5) de bordure, pour abaisser la partie (40) en biais et/ou le premier chant (11) de la première feuille (1) d'étanchéité et/ou le deuxième chant (12) de la deuxième feuille (2) d'étanchéité contre la troisième feuille (21) d'étanchéité ou contre la deuxième autre couche recouvrant la troisième feuille (21) d'étanchéité, afin de réaliser une soudure (1020) de la partie (40) en biais et/ou du premier chant (11) de la première feuille (1) d'étanchéité et/ou du deuxième chant (12) de la deuxième feuille (2) d'étanchéité contre la troisième feuille (21) d'étanchéité ou contre la deuxième autre couche recouvrant la troisième feuille (21) d'étanchéité et afin de réaliser une soudure (S) de la première zone (5) de bordure de la première membrane (10) d'étanchéité de bassin contre la deuxième zone (25) de bordure de la deuxième membrane (20) d'étanchéité de bassin.

9. Procédé suivant la revendication 8, **caractérisé en ce que** la soudure (1020) est localisée sur le bord (4) de la première membrane (10) d'étanchéité de bassin.

10. Procédé suivant la revendication 8 ou 9, **caractérisé en ce que** la première feuille (1) d'étanchéité est en PVC ou comporte du PVC, la deuxième feuille (2) d'étanchéité est en PVC ou comporte du PVC, la troisième feuille (21) d'étanchéité est en PVC ou comporte du PVC.

11. Bassin destiné à contenir un liquide, le bassin comportant un fond et des parois délimitant un volume destiné à contenir le liquide,
**caractérisé en ce que** le fond et/ou au moins l'une des parois comporte au moins une première membrane (10) d'étanchéité de bassin suivant l'une quelconque des revendications 1 à 7, dont le bord (4) est soudé à une deuxième membrane (20) d'étanchéité de bassin par le procédé de soudage suivant l'une quelconque des revendications 8 à 10,
la deuxième membrane (20) d'étanchéité de bassin ayant au moins une troisième feuille (21) d'étanchéité en un matériau soudable à chaud, qui est destinée à être tournée vers l'eau du bassin ou qui est recouverte d'au moins une deuxième autre couche destinée à être tournée vers l'eau du bassin.

## Patentansprüche

1. Beckenabdichtmembran (10), die in der Dickenrichtung umfasst:
- eine erste Abdichtfolie (1) aus einem heiß schweißbaren Material, die dazu bestimmt ist, dem Wasser des Beckens zugewandt zu sein oder die von mindestens einer ersten anderen Schicht (7) bedeckt ist, die dazu bestimmt ist, dem Wasser des Beckens zugewandt zu sein,
- eine zweite Abdichtfolie (2) aus einem heiß schweißbaren Material, die dazu bestimmt ist, teilweise einer anderen Membran zugewandt zu sein und weiter von dem Wasser des Beckens entfernt zu sein als die erste Abdichtfolie (1),
- und einen Schuss (3), der sich zwischen der ersten Abdichtfolie (1) und der zweiten Abdichtfolie (2) befindet,
wobei die Beckenabdichtmembran (10) mindestens einen Rand (4) umfasst, der eine erste Kante (11) der ersten Abdichtfolie (1) und eine zweite Kante (12) der zweiten Abdichtfolie (2) aufweist,
**dadurch gekennzeichnet, dass**
der Rand (4) in der Dickenrichtung einen schrägen Teil (40) umfasst, der sich in der ersten Kante (11) der ersten Abdichtfolie (1) und/oder in der zweiten Kante (12) der zweiten Abdichtfolie (2) befindet,
wobei der schräge Teil (40) sich senkrecht zur Dickenrichtung der Membran (10) von der zweiten Kante der zweiten Abdichtfolie (2) zur ersten Kante der ersten Abdichtfolie (1) verbreitert, wobei die erste Kante (11) der ersten Abdichtfolie (1) in Bezug auf die zweite Kante (12) der zweiten Abdichtfolie (2) zumindest teilweise überhängt.

2. Abdichtmembran (10) nach Anspruch 1, **dadurch gekennzeichnet, dass** die zweite Kante (12) der zweiten Abdichtfolie (2) als schrägen Teil (40) eine Abfasung besitzt.

3. Abdichtmembran (10) nach irgendeinem der vorhergehenden Ansprüche, **dadurch gekennzeichnet, dass** der schräge Teil (40) sich an zwei Endrändern (41, 42) der Membran (10) befindet, die einander entgegengesetzt sind.

4. Abdichtmembran (10) nach irgendeinem der vorhergehenden Ansprüche, **dadurch gekennzeichnet, dass** der schräge Teil (40) abgeschrägt ist und sich in der ersten Kante (11) der ersten Abdichtfolie (1) und/oder in der zweiten Kante (12) der zweiten Abdichtfolie (2) befindet.

5. Abdichtmembran (10) nach irgendeinem der vorhergehenden Ansprüche, **dadurch gekennzeichnet, dass** der schräge Teil (40) die gesamte Dicke der ersten Kante (11) der ersten Abdichtfolie (1) und/oder die gesamte Dicke der zweiten Kante (12) der zweiten Abdichtfolie (2) einnimmt.

6. Abdichtmembran (10) nach irgendeinem der vorhergehenden Ansprüche, **dadurch gekennzeichnet, dass** die erste andere Schicht, die dazu bestimmt ist, dem Wasser des Beckes zugewandt zu sein, mindestens eine Schutzlackschicht (7) ist, die die erste Abdichtfolie (1) bedeckt.

7. Abdichtmembran (10) nach irgendeinem der vorhergehenden Ansprüche, **dadurch gekennzeichnet, dass** die erste Abdichtfolie (1) aus PVC besteht oder PVC enthält und die zweite Abdichtfolie (2) aus PVC besteht oder PVC enthält.

8. Verfahren zum Stumpfschweißen einer ersten Beckenabdichtmembran (10) nach irgendeinem der vorhergehenden Ansprüche an eine zweite Beckenabdichtmembran (20),
wobei die zweite Beckenabdichtmembran (20) mindestens eine dritte Abdichtfolie (21) aus heiß schweißbarem Material aufweist, die dazu bestimmt ist, dem Wasser des Beckens zugewandt zu sein oder die von mindestens einer zweiten anderen Schicht bedeckt ist, die dazu bestimmt ist, dem Wasser des Beckens zugewandt zu sein,
**dadurch gekennzeichnet, dass**
eine erste Randzone (5) der zweiten Abdichtfolie (2) abdeckend gegen eine zweite Randzone (25) der dritten Abdichtfolie (21) oder der zweiten anderen Schicht, die die zweite Abdichtfolie (21) bedeckt, platziert wird, wobei die erste Randzone mit dem Rand (4) endet, der anfangs den schrägen Teil (40) aufweist, derart, dass der schräge Teil (40) über der dritten Abdichtfolie (21) oder der zweiten anderen Schicht überhängt, die die dritte Abdichtfolie (21) bedeckt,
dann während eines Heißschweißschritts auf die erste Abdichtfolie (1) oder auf die erste andere Schicht (7), die die erste Abdichtfolie (1) bedeckt, heiß ein Druck über dem Rand (4) und über der ersten Randzone (5) ausgeübt wird, um den schrägen Teil (40) und/oder die erste Kante (11) der ersten Abdichtfolie (1) und/oder die zweite Kante (12) der zweiten Abdichtfolie (2) gegen die dritte Abdichtfolie (21) oder gegen die zweite andere Schicht, die die zweite Abdichtfolie (21) bedeckt, herunterzudrücken, um ein Schweißen (1020) des schrägen Teils (40) und/oder der ersten Kante (11) der ersten Abdichtfolie (1) und/oder der zweiten Kante (12) der zweiten Abdichtfolie (2) gegen die dritte Abdichtfolie (21) oder gegen die zweite andere Kante, die die dritte Abdichtfolie (21) bedeckt, auszuführen und um eine Schweißung (S) der ersten Randzone (5) der ersten Beckenabdichtmembran (10) gegen die zweite Randzone (25) der zweiten Beckenabdichtmembran (20) auszuführen.

9. Verfahren nach Anspruch 8, **dadurch gekennzeichnet, dass** die Schweißung (1020) sich an dem Rand (4) der ersten Beckenabdichtmembran (10) befindet.

10. Verfahren nach Anspruch 8 oder 9, **dadurch gekennzeichnet, dass** die erste Abdichtfolie (1) aus PVC besteht oder PVC enthält, die zweite Abdichtfolie (2) aus PVC besteht oder PVC enthält und die dritte Abdichtfolie (21) aus PVC besteht oder PVC enthält.

11. Becken, das dazu bestimmt ist, eine Flüssigkeit zu enthalten, wobei das Becken einen Boden und Wände umfasst, die ein Volumen abgrenzen, das dazu bestimmt ist, die Flüssigkeit zu enthalten,
**dadurch gekennzeichnet, dass** der Boden und/oder mindestens eine von den Wänden mindestens eine erste Beckenabdichtmembran (10) nach irgendeinem der Ansprüche 1 bis 7 umfasst, deren Rand (4) durch das Schweißverfahren nach irgendeinem der Ansprüche 8 bis 10 an eine zweite Beckenabdichtmembran (20) geschweißt ist,
wobei die zweite Beckenabdichtmembran (20) mindestens eine dritte Abdichtfolie (21) aus einem heiß schweißbaren Material aufweist, die dazu bestimmt ist, dem Wasser des Beckens zugewandt zu sein, oder die von mindestens einer zweiten anderen Schicht bedeckt ist, die dazu bestimmt ist, dem Wasser des Beckens zugewandt zu sein.

## Claims

1. A basin sealing membrane (10), including in the thickness direction:
- a first sealing sheet (1) made of a heat-weldable material, which is intended to be facing the water of the basin or which is covered with at least a first other layer (7) intended to be facing the water of the basin,
- a second sealing sheet (2) made of a heat-weldable material, which is intended to be partly facing another membrane and to be further from the water of the basin than the first sealing sheet (1),
- and a frame (3) located between the first sealing sheet (1) and the second sealing sheet (2),
the basin sealing membrane (10) including at least one edge (4), having a first rim (11) of the first sealing sheet (1) and a second rim (12) of the second sealing sheet (2),
**characterized in that**
the edge (4) includes, in the thickness direction, an angled portion (40) located in the first rim (11) of the first sealing sheet (1) and/or in the second rim (12) of the second sealing sheet (2),
the angled portion (40) widening perpendicular to the thickness direction of the membrane (10) from the second rim of the second sealing sheet (2) to the first rim of the first sealing sheet (1), the first rim (11) of the first sealing sheet (1) at least partially overhanging from the second rim (12) of the second sealing sheet (2).

2. The sealing membrane (10) according to claim 1, **characterized in that** the second rim (12) of the second sealing sheet (2) has a chamfer as an angled portion (40).

3. The sealing membrane (10) according to any one of the preceding claims, **characterized in that** the angled portion (40) is located in two end edges (41, 42), opposite to each other, of the membrane (10).

4. The sealing membrane (10) according to any one of the preceding claims, **characterized in that** the angled portion (40) is like a bevel located in the first rim (11) of the first sealing sheet (1) and/or in the second rim (12) of the second sealing sheet (2).

5. The sealing membrane (10) according to any one of the preceding claims, **characterized in that** the angled portion (40) occupies the entire thickness of the first rim (11) of the first sealing sheet (1) and/or the entire thickness of the second rim (12) of the second sealing sheet (2).

6. The sealing membrane (10) according to any one of the preceding claims, **characterized in that** the first other layer intended to be facing the water of the basin is at least one layer (7) of protective varnish covering the first sealing sheet (1).

7. The sealing membrane (10) according to any one of the preceding claims, **characterized in that** the first sealing sheet (1) is made of PVC or includes PVC, the second sealing sheet (2) is made of PVC or includes PVC.

8. A method for butt-welding a first basin sealing membrane (10) according to any one of the preceding claims on a second basin sealing membrane (20),
the second basin sealing membrane (20) having at least a third sealing sheet (21) made of a heat-weldable material, which is intended to be facing the water of the basin or which is covered with at least a second other layer intended to be facing the water of the basin,
**characterized in that**
a first border area (5) of the second sealing sheet (2) is overlaid against a second border area (25) of the third sealing sheet (21) or of the second other layer covering the third sealing sheet (21), the first border area ending with the edge (4) having initially the angled portion (40), so that the angled portion (40) overhangs above the third sealing sheet (21) or the second other layer covering the third sealing sheet (21),
then during a heat-welding step, a hot-pressure above the edge (4) and above the first border area (5) is applied on the first sealing sheet (1) or on the first other layer (7) covering the first sealing sheet (1), in order to lower the angled portion (40) and/or the first rim (11) of the first sealing sheet (1) and/or the second rim (12) of the second sealing sheet (2) against the third sealing sheet (21) or against the second other layer covering the third sealing sheet (21), in order to make a weld (1020) of the angled portion (40) and/or of the first rim (11) of the first sealing sheet (1) and/or of the second rim (12) of the second sealing sheet (2) against the third sealing sheet (21) or against the second other layer covering the third sealing sheet (21) and in order to make a weld (S) of the first border area (5) of the first basin sealing membrane (10) against the second border area (25) of the second basin sealing membrane (20).

9. The method according to claim 8, **characterized in that** the weld (1020) is located on the edge (4) of the first basin sealing membrane (10).

10. The method according to claim 8 or 9, **characterized in that** the first sealing sheet (1) is made of PVC or includes PVC, the second sealing sheet (2) is made of PVC or includes PVC, the third sealing sheet (21) is made of PVC or includes PVC.

11. A basin intended to contain a liquid, the basin including a bottom and walls delimiting a volume intended to contain the liquid,
**characterized in that** the bottom and/or at least one of the walls includes at least a first basin sealing membrane (10) according to any one of claims 1 to 7, whose edge (4) is welded to a second basin sealing membrane (20) by the welding method according to any one of claims 8 to 10,
the second basin sealing membrane (20) having at least a third sealing sheet (21) made of a heat-weldable material, which is intended to be facing the water of the basin or which is covered with at least a second other layer intended to be facing the water of the basin.
